# EUROPEAN PATENT APPLICATION

(11) **EP 4 799 931 A1**
(43) Date of publication of application: **02.09.2026**
(21) Application number: 25160274.4
(22) Date of filing: 26.02.2025
(51) Int. Cl.: B64D 11/02, B64D 11/04

(54) **POTABLE WATER CONNECTION FOR AN AIRCRAFT WATER CONSUMER**

(71) Applicant: AIRBUS Operations GmbH, 21129 Hamburg (DE)
(72) Inventor: STOLLE, Christian, 21129 Hamburg (DE); JEONG, Jaewook, 21129 Hamburg (DE)
(74) Representative: Schornack, Oliver

(57) **Abstract**

The present disclosure relates to a potable water connection (100) for a water consumer in an aircraft and comprises a main body (110) having an outer thread (112), a male fitting (120) configured to be coupled to the water consumer, a connector (130) configured to be coupled to a potable water supply means (190), and a nut plate (180) threaded onto the outer thread (112). The present disclosure further relates to an aircraft monument and an aircraft having such potable water connection.

## Description

The present disclosure generally relates to a potable water connection for a water consumer in an aircraft, and an aircraft monument as well as an aircraft comprising the same. Particularly, the present disclosure relates to a potable water connection having an outer thread allowing adaptation of the potable water connection to different kinds of aircraft monuments.

A conventional water consumer in an aircraft, such as a faucet, is built for monuments, in which the faucet is to be installed. Thus, the conventional faucet is connected to a potable water supply directly (e.g., directly connected to a potable water hose or tube) or via a specific connector designed for the monument covering a limited number of monument designs. The monument design results in an available space for this potable water connection depending on the used structural parts. A change of outer dimensions, e.g., due to different structural materials, or a new monument configuration may lead to changes of the available space which may cause large impact in design work to cope with the given potable water connection.

This leads to a plurality of aircraft components for different types of aircrafts as well as different types of monuments. Each component dedicated for an aircraft requires development and certification to be allowed for installation in the aircraft. For example, each component to be installed in an aircraft receives a unique certification.

It is therefore an object of the present disclosure to reduce the effort involved in installing a potable water supply system in an aircraft.

This object is solved by the present invention as defined in the independent claims. Preferred embodiments are defined by the dependent claims.

According to a first aspect to better understand the present disclosure, a potable water connection for a water consumer in an aircraft comprises a main body, a male fitting configured to be coupled to a female fitting of the water consumer, the male fitting being disposed at a first end of the main body, and a connector configured to be coupled to an end fitting of a potable water supply means, the connector being disposed at a second end of the main body.

The potable water connection further comprises an outer thread arranged on an outer surface of the main body, and a nut plate threaded onto the outer thread. The nut plate, hence, comprises an inner thread corresponding to the outer thread arranged on the outer surface of the main body. Thus, a distance between the nut plate and the connector can be adjusted by turning the nut plate on the outer thread. This allows adapting the potable water connection to any constraints with respect to an element, to which the potable water connection is to be mounted. Such elements include a monument wall, a countertop structure of a washbasin, a rear wall and/or decorum element in the monument, or the like.

Therefore, the potable water connection can be employed in an aircraft irrespective of the type of monument as well as irrespective of the type of aircraft. This reduces the number of components/parts to be developed as well as to be qualified or certified for the aircraft, which significantly reduces costs over an aircraft fleet.

In addition, by rotating the main body in the nut plate tolerances can be compensated. For example, the potable water supply means may be arranged at an angle with respect to the potable water connection. Such angle can be compensated by a (small) rotation of the main body. Although such rotation in the inner thread of the nut plate leads to a displacement of the main body and, hence, the connector in longitudinal direction of the main body (i.e., the axial direction of the outer thread), such displacement in the longitudinal direction is quite small in relation to the rotational tolerance range that can be compensated.

The potable water connection may also be referred to as the potable water adapter or potable water wall connector.

In an implementation variant, the main body can form a pipe. This is to be understood as the main body being hollow, so that potable water can run through the main body from the second end to the first end. The outer appearance of the main body may at least partially from a pipe. The present disclosure is not limited to a pipe shape of the outer appearance of the main body. Rather, the outer appearance of the main body can deviate from a pipe shape at least in one or more sections thereof.

In an implementation variant, the male fitting and/or the connector can be integrated into the main body. In other words, the male fitting and/or the connector together with the main body form a one-piece component. Thus, the number of components that requires certification for the aircraft can be reduced to one.

In an implementation variant, the connector can be arranged at an angle with respect to a longitudinal direction of the main body. Thus, a direction of extension of the connector intersects a longitudinal axis of the main body. As a mere example, the angle between the main body and the connector can be between 80° and 100°. This angle pertains the intersection of a direction, in which the end fitting of the potable water supply means is coupled to the connector, and the longitudinal direction of the main body.

In an implementation variant, the connector can comprise a female fitting configured to couple with the end fitting of the potable water supply means. As mere examples, the female fitting of the connector can comprise an inner thread or a snap fitting. Thus, a standard fitting between the potable water supply means and the connector can be employed.

In an implementation variant, the connector can comprise a male fitting configured to couple with the end fitting of the potable water supply means. Such male fitting can be implemented as an outer thread or a snap fitting.

In an implementation variant, the nut plate can comprise at least one through hole configured to receive a fastener for mounting the nut plate. Therefore, the potable water connection can be mounted with the fastener, while the nut plate is fixed to another component of the aircraft.

In an implementation variant, the male fitting (at the first end of the main body) can be configured to hold a seal. Such seal may achieve a fluid tight connection between the male fitting and the water consumer (or an internal water connecting component of the water consumer). As a mere example, the male fitting can form a recess configured to receive the seal. Such recess may be provided in the form of a groove on an outer surface of the main body at its first end. Alternatively or additionally, the recess may be formed by two circumferential protrusions spaced apart from one another and having the recess arranged therebetween. The seal can be, for example, an O-ring.

According to a second aspect to better understand the present disclosure, an aircraft monument comprises an inner wall, an outer wall being spaced apart from the inner wall, and a potable water connection of the first aspect or one or more of its variants. The nut plate is mounted to the inner wall and the connector is arranged in a space between the inner wall and the outer wall.

Due to the nut plate being threaded onto the outer thread of the main body, a distance between the connector and the nut plate and, hence, a distance between the connector and the inner wall, can be adjusted. This adjustment allows arranging the potable water connection relative to the inner wall, so that the connector (and eventually a part of the main body) can fit into the space between the inner wall and the outer wall. In other words, the potable water connection can be adapted to the circumstances and limitations provided by the monument, particularly the inner and outer wall and the distance therebetween. The potable water connection, hence, can be used with respect to any monument, so that a "one size fits all" water connection can be certified and provided.

In an implementation variant, the outer thread can extend along the longitudinal direction of the main body, so that a distance between the nut plate and the connector can be adapted to the space between the inner and outer walls.

In an implementation variant, the aircraft monument can further comprise a water consumer connected to the male fitting. Specifically, the water consumer can be fluidly coupled to the male fitting, i.e., the water consumer and the male fitting are coupled in a fluid tight manner. The water consumer can optionally be mounted to the inner wall, an intermediate component or solely to the male fitting of the potable water connection.

In an implementation variant, the water consumer can be a faucet to provide potable water (at a pre-set or adjustable temperature), a coffeemaker, hot water dispenser, or the like. In other words, the water consumer can be any aircraft component that provides or requires potable water.

In an implementation variant, the aircraft monument can further comprise a potable water supply means arranged in the space between the inner and outer walls. Such potable water supply means can be a duct, tube or hose that fluidly connects the region, where the water consumer is to be installed, with a water supply system of the aircraft (e.g., a water supply duct running through the aircraft, such as below the monument).

In an implementation variant, the potable water supply means can be a standard water supply hose. As a mere example, a wire braid reinforced hose can be employed. Furthermore, the ends of the hose can be equipped with any kind of fittings, such as threaded end fittings. Such end fittings may include a metric thread or an imperial thread. Only as examples, the end fittings can have a M8X1 end or G3/8 end. It is to be understood that any standardised end fitting can be employed and the present disclosure is not restricted to the above two examples.

According to a third aspect to better understand the present disclosure, an aircraft comprises at least one potable water connection of the first aspect or one or more of its variants.

Alternatively or additionally, the aircraft can comprise at least one aircraft monument of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the described aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a side view of a potable water connection;
- Figure 2: schematically illustrates a bottom view and a back view of the potable water connection of Figure 1;
- Figure 3: schematically illustrates two different monument configurations, each having the potable water connection installed therein; and
- Figure 4: schematically illustrates an aircraft having a monument with a potable water connection.

In the following description, for purposes of explanation and not limitation, specific details are set forth in order to provide a thorough understanding of the present disclosure. It will be apparent to one skilled in the art that the present disclosure may be practiced in other implementations that depart from these specific details.

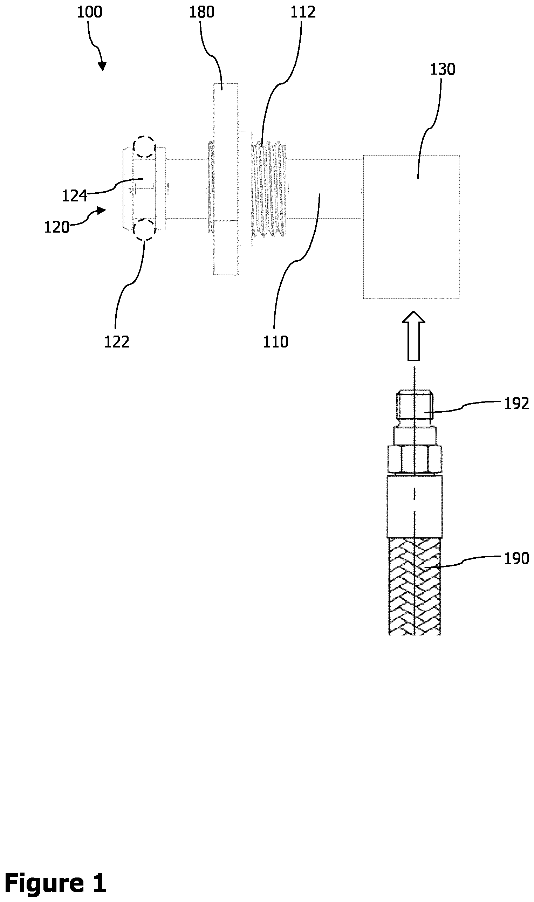

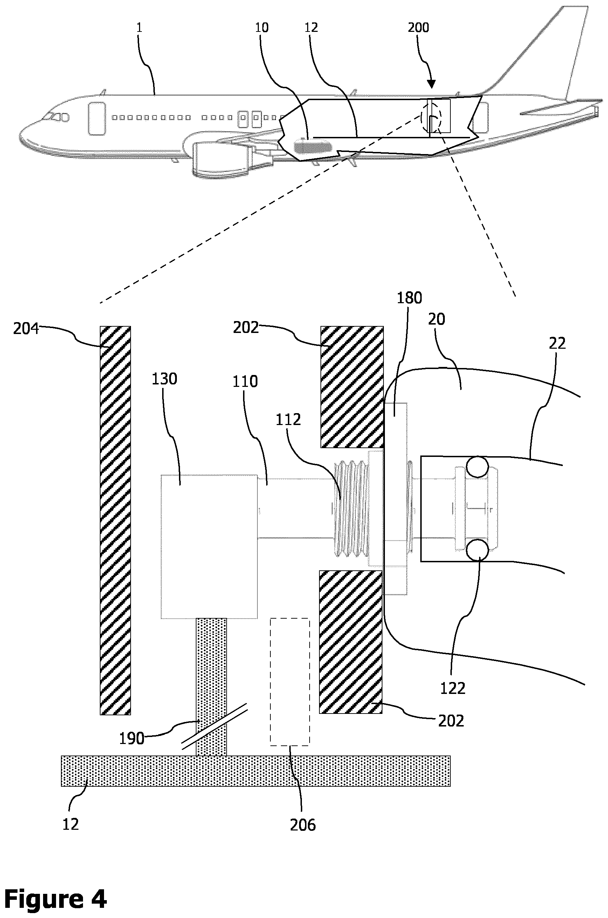

Figure 1 schematically illustrates a potable water connection 100 for a water consumer, e.g., a faucet 20 in an aircraft 1 (Figure 4). The potable water connection 100 is a component that can be arranged between a potable water supply means 190 and the water consumer 20 and can be fluidly connected to both.

The potable water connection 100 comprises a main body 110, a male fitting 120 and a connector 130. The male fitting 120 and/or the connector 130 can form part of the main body, for example, can be integrated into the main body. The male fitting 120 is configured to be coupled to a female fitting 22 of the water consumer 20 (Figure 4) and is disposed at a first end of the main body 110. The connector is configured to be coupled to an end fitting 192 of the potable water supply means 190 and is disposed at a second end of the main body 110. In other words, the potable water connection 100, and particularly its main body 110, forms an intermediate water conducting element between the potable water supply means 190 and the water consumer 20.

The potable water supply means 190 is illustrated as a water supply hose and, particularly a wire braid hose. However, the potable water supply means 190 can be any water supplying (water conducting) means, such as a tube, duct or the like.

The potable water connection further comprises an outer thread 112 arranged on an outer surface of the main body 110, and a nut plate 180 threaded onto the outer thread 112. The outer thread 112 can be supplemented to the main body 110 or can be integrated into the outer surface of the main body 110, for example, by machining the outer surface of the main body 110. Thus, the main body 110 can be inserted into the opening of the nut plate 180, for example, by inserting the male fitting 120, and can then be screwed into the nut plate 180. Thereafter, the end fitting 192 can be fluidly coupled to the connector 130.

The male fitting 120 can be configured to hold a seal 122 (illustrated in dashed lines in Figure 1). For instance, the male fitting 120 forms a recess 124 running circumferentially around the male fitting 120 (the first end of the main body 110). The recess may be formed by making a groove into the outer surface of the main body 110 or as illustrated in Figure 1, by providing two protrusions having a recess therebetween, the recess being configured to receive the seal 122. The seal 122 can be employed to provide a fluid tight connection to the water consumer 20, particularly a female fitting 22 in the water consumer 20.

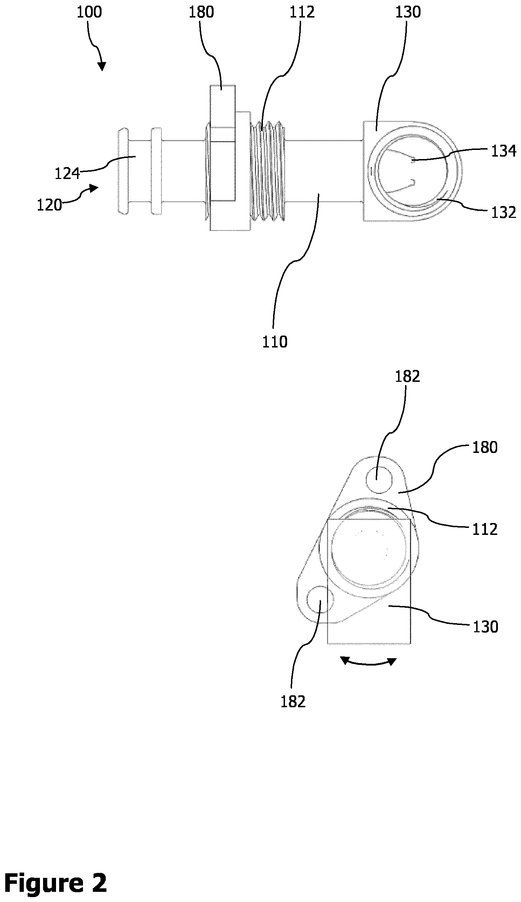

Figure 2 illustrates a bottom view and a back view of the potable water connection 100 of Figure 1. The bottom view allows viewing into the connector 130 and renders a portion of the hollow pipe formed by the interior of the main body 110 visible, particularly where such hollow pipe transitions into the opening in the connector 130.

The connector 130 can comprise an exemplary inner thread 132. This inner thread 132 can correspond to an outer thread of the end fitting 192 of the potable water supply means 190. Alternatively, a connection between the connector 130 and the end fitting 192 can be performed, for example, via a click-and-snap connection and a seal provided on the end fitting 192 and/or inside of the connector 130.

The back view in Figure 2 (viewing along a longitudinal direction of the potable water connection 110) illustrates the connector 130, portions of the main body 110 and the outer thread 112. The connector 130 is illustrated transparent, in order to render the main body 110 and outer thread 112 visible.

The nut plate 180 can comprise at least one through hole 182 (particularly visible in the back view of Figure 2) configured to receive a fastener (not illustrated) for mounting the nut plate 180.

Thus, as can be derived from Figures 1 and 2, the nut plate 180 can be threaded onto the main body 110 up to any desired position along the longitudinal direction of the main body 110 (left-right direction in Figure 1). This provides for an adaptation of the potable water connection 100 to any installation situation.

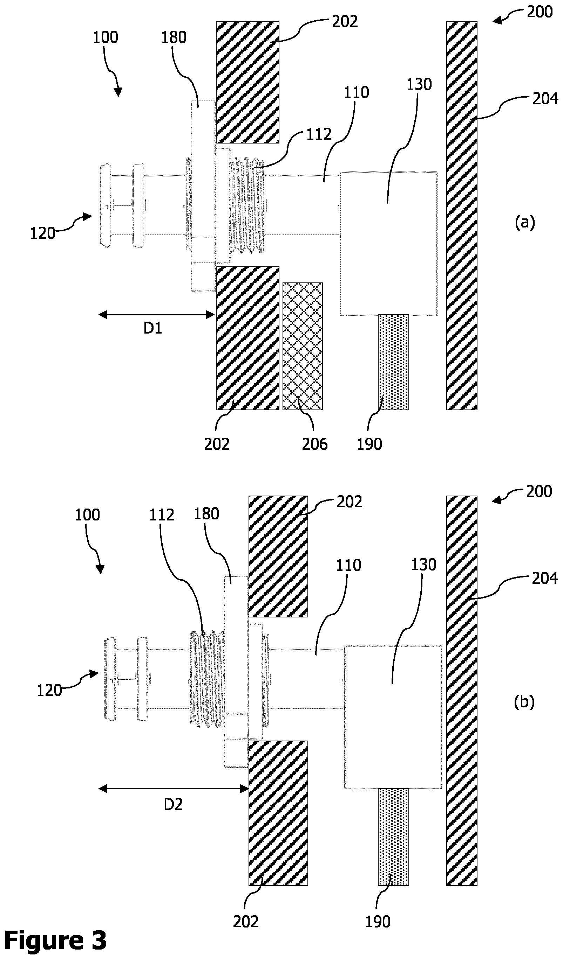

This will be explained in more detail with respect to Figure 3. Figures 3(a) and 3(b) illustrate different types of monuments 200, particularly monuments 200 having different arrangements of walls/components. Both monuments 200 include an inner wall 202 and an outer wall 204 spaced apart from one another. The intermediate space between the inner and outer walls 202, 204 can be used to hide particular components of the aircraft 1, such as the water supply means 190 and the illustrated component 206 (e.g., a control component or other supply means).

It is to be understood that the inner wall 202 refers to the monument component that forms a visible surface on the inner side of the monument 200, such as a countertop, a decor element, a rear wall of a washbasin, and L-shaped mount for a washbasin, etc.. Likewise, the component 206 can be a component that is installed in the interior space between inner and outer walls 202, 204. On the other hand, component 206 can also be a structural inner wall of the monument 200, particularly, if the element 202 is a decor element or other non-structural component.

Figure 3(a) illustrates the potable water connection 100, where the nut plate 180 is arranged on the outer thread 112 at a position closer to the first end, i.e. closer to the male fitting 120 than the connector 130. This allows mounting the nut plate 180 to the inner monument wall 202, while the connector 130 is arranged closer to the outer wall 204. Thus, the connector 130 may not interfere with the component 206.

Figure 3(b) illustrates the potable water connection 100, where the nut plate 180 is arranged on the outer thread 112 at a position closer to the second end of the main body 110, i.e. closer to the connector 130 than the male fitting 120. This allows positioning the connector 130 closer to the inner wall 202.

Specifically, as illustrated in Figure 3, the distance D1, about which the first end extends from the inner wall 202, is smaller in the first example, according to Figure 3(a), than the distance D2, about which the first end extends from the inner wall 202, in the second example, according to Figure 3(b). In other words, the distance between the nut plate 180 and the tip of the first end (i.e., the male fitting 120) can be adapted in such a manner that the connector 130 corresponds to the arrangement of and/or the space between the inner and outer walls 202, 204.

Therefore, a single potable water connection 100 can be employed for both monument configurations. Thus, there is no necessity to produce, certify and store a variety of water connections.

While a rotation of the main body 110 around its longitudinal axis allows positioning the main body 110 relative to the nut plate 180, such rotation further provides for the main body to rotate, even when the potable water connection is installed, i.e. when the nut plate 180 is fastened to a monument component, such as the inner wall 202. Figure 2 (in the back view) shows a double arrow indicating such rotation around a longitudinal axis of the main body 110 (perpendicular to the drawing plane of Figure 2). A small rotation compensates tolerances with respect to the potable water supply means 190, which may not run vertically, but slightly deviates from a vertical line.

Figure 4 schematically illustrates an aircraft 1 including a monument 200 with a potable water connection 100, details of the monument 200 and a water supply provided to the monument 200. The aircraft 1 can include a water supply system comprising a central tank 10 and a water supply duct 12, that may run along a longitudinal direction of the aircraft. Such water supply duct 12 can be used to supply potable water to a plurality of water consumers 20. Figure 4 illustrates a single water consumer 20 in form of a faucet 20 arranged in the monument 200. A water supply means 190 connects the water supply duct 12 with the monument 200, and particularly with a potable water connection 100, such as the potable water connection illustrated in Figures 1 to 3.

The water consumer 20 can comprise a female fitting 22 that is connected to the male fitting 120 of the potable water connection 100. It is to be understood that the water consumer 20 can comprise a male fitting that is connected to a female fitting of the potable water connection 100. Thus the present disclosure is not restricted to the illustrated male fitting 120 of the potable water connection 100. Nevertheless, a male fitting 120 is advantageous as providing the largest inner diameter for the flow of water, while it can be inserted into the nut plate 180, i.e. an outer diameter of the male fitting 120 is (slightly) smaller than an inner diameter of the threaded opening in the nut plate 180.

The potable water supply means 190 is arranged in the space between the inner and outer walls 202, 204, where an upper end of the water supply means 190 having an end fitting 192 (Figure 1) can be fluidly coupled to the connector 130 of the potable water connection 100.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A potable water connection (100) for a water consumer (20) in an aircraft (1), comprising:
a main body (110);
a male fitting (120) configured to be coupled to a female fitting (22) of the water consumer (20), the male fitting (120) being disposed at a first end of the main body (110); and
a connector (130) configured to be coupled to an end fitting (192) of a potable water supply means (190), the connector (130) being disposed at a second end of the main body (110),
**characterised in that** the potable water connection (100) further comprises:
an outer thread (112) arranged on an outer surface of the main body (110); and
a nut plate (180) threaded onto the outer thread (112).

2. The potable water connection (100) of claim 1, wherein the connector (130) is arranged at an angle with respect to a longitudinal direction of the main body (110), wherein, preferably, the angle is between 80° and 100°, and/or
wherein the connector (130) comprises a female fitting configured to couple with the end fitting (192), wherein preferably, the female fitting of the connector (130) comprises an inner thread or a snap fitting.

3. The potable water connection (100) of claim 1 or 2, wherein the nut plate (180) comprises at least one through hole (182) configured to receive a fastener for mounting the nut plate (180).

4. The potable water connection (100) of one of claims 1 to 3, wherein the male fitting (120) is configured to hold a seal (122), wherein, preferably, the male fitting (120) forms a recess (124) configured to receive the seal (122).

5. An aircraft monument (200), comprising:
an inner wall (202, 206);
an outer wall (204) being spaced apart from the inner wall (202, 206); and
a potable water connection (100) of one of claims 1 to 4,
wherein the nut plate (180) is mounted to the inner wall (202) and the connector (130) is arranged in a space between the inner wall (202) and the outer wall (204).

6. The aircraft monument (200) of claim 5, wherein the outer thread (112) extends along the longitudinal direction of the main body (110), so that a distance between the nut plate (180) and the connector (130) can be adapted to the space between the inner and outer walls (202, 204).

7. The aircraft monument (200) of claim 5 or 6, further comprising:
a water consumer (20) connected to the male fitting (120); and/or
a potable water supply means (190) arranged in the space between the inner and outer walls (202, 204).

8. An aircraft (1), comprising:
at least one potable water connection (100) of one of claims 1 to 4; and/or
at least one aircraft monument (200) of one of claims 5 to 7.
